# EUROPEAN PATENT APPLICATION

(11) **EP 3 893 088 A1**
(43) Date of publication of application: **13.10.2021**
(21) Application number: 20168505.4
(22) Date of filing: 07.04.2020
(51) Int. Cl.: G06F 3/01, G06F 3/0481

(54) **MODIFYING DISPLAYED CONTENT**

(71) Applicant: Koninklijke Philips N.V., 5656 AG Eindhoven (NL)
(72) Inventor: TALGORN, Elise Claude Valentine, 5656 AE Eindhoven (NL); LAUTE, Niels, 5656 AE Eindhoven (NL); GEURTS, Lucas Jacobus Franciscus, 5656 AE Eindhoven (NL); DU, Jia, 5656 AE Eindhoven (NL); BANNENBERG, Gijs, 5656 AE Eindhoven (NL)
(74) Representative: Philips Intellectual Property & Standards

(57) **Abstract**

The invention discloses a computer-implemented method (500, Fig. 5) of modifying an item of computer-generated content displayed on a display screen (108). The method includes the steps of displaying an item of computer-generated content on a display screen positioned between an eye of a user (102) and an object (104); receiving data relating to the object and/or to an action of a user in relation to the object; determining, based on the received data, a region of interest (122) of the object; and modifying the appearance of the item of computer-generated content to reduce an amount by which the item of computer-generated content obscures the user's view of the region of interest of the object. A system and a computer program product are also disclosed.

## Description

### FIELD OF THE INVENTION

The invention relates to modifying displayed content and, more particularly, to modifying an item of computer-generated content displayed on a display screen.

### BACKGROUND OF THE INVENTION

Computer-generated information may be overlaid or superimposed over a real-world environment to create an augmented reality environment. The computer-generated information may be provided to enhance or supplement a person's view or perception of the real-world environment, or to mask or disguise the real-world environment. Augmented reality may be used for a range of applications including, for example, displaying real time information to a person performing a particular task in respect of an object in the real-world environment, such as a medical professional performing a medical procedure or a field service engineer performing an installation, maintenance or refurbishment task in respect of a piece of equipment. Examples of computer-generated information that may be displayed for the person might include medical information relating to a patient or steps of a task list or instruction manual relating to a piece of equipment being serviced.

In some circumstances, computer-generated information that is overlaid or superimposed over a real-world environment may distract a viewer from an object in the real-world environment. Therefore, there is a desire for a system in which computer-generated content can be presented to overlay a real-world environment, which can automatically take appropriate action if the presented content becomes distracting to the user, or adversely affects the user's interaction with the real-world environment.

### SUMMARY OF THE INVENTION

When computer-generated content is displayed to a user on a display screen in order to create an augmented reality environment, there exists the possibility that the displayed content obscures the user's view of an object in the real-world environment with which they are interacting. It can be important that a user of an augmented reality system is not distracted from a task they are performing, but it can be difficult or inappropriate for them to take action to change the displayed content while they are performing the task. According to various embodiments disclosed herein, systems and methods are provided which can use sensor data to determine when an item of displayed content should be modified to reduce the impact on the user's interaction with the real-world environment.

According to a first aspect, the present invention provides a computer-implemented method of modifying an item of computer-generated content displayed on a display screen. The method comprises displaying an item of computer-generated content on a display screen positioned between an eye of a user and an object; receiving data relating to the object and/or to an action of a user in relation to the object; determining, based on the received data, a region of interest of the object; and modifying the appearance of the item of computer-generated content to reduce an amount by which the item of computer-generated content obscures the user's view of the region of interest of the object.

In some embodiments, the method may further comprise establishing, based on the received data, that the eye of the user is focused on the region of interest of the object or that the user is performing an action in respect of the region of interest of the object. The step of modifying may comprise modifying the appearance of the item of computer-generated content based on said establishing.

The method may, in some embodiments, further comprise displaying an image of the object on the display screen with the item of computer-generated content. The step of modifying may comprise modifying the appearance of the item of computer-generated content to reduce an amount by which the item of computer-generated content obscures the user's view of the region of interest of the object in the displayed image of the object.

In some embodiments, the received data may comprise one of more of: eye gaze data of the user, data indicative of a focus of the eye of the user, data indicative of a movement or gesture performed by the user, data indicative of spatial properties of the object, data indicating an identity of the object, and sound data in relation to the user.

In some embodiments, the received data may comprise a combination of eye gaze data and data indicative of spatial properties of the object. In other embodiments, the received data may comprise a combination of eye gaze data and data indicative of a movement or gesture made by the user.

The method may further comprise determining, based on the received data, contextual information relating to the user, the object and/or the action of the user in relation to the object. The step of modifying may comprise modifying the appearance of the item of computer-generated content based on the determined contextual information.

In some embodiments, the method may further comprise determining, based on the received data, whether or not the appearance of the item of computer-generated content is to be modified.

The method may comprise receiving workflow information defining a procedure or workflow to be performed by the user in respect of the object. In some embodiments, the method may further comprise determining, based on the received data relating to an action of the user in relation to the object, progress made by the user with respect to the procedure or workflow. The step of determining whether or not the appearance of the item of computer-generated content is to be modified may be based on the determined progress.

The action of the user in relation to the object may, in some embodiments, comprise a physical interaction between the user and the object.

According to a second aspect, the present invention provides a computer program product comprising a non-transitory computer-readable medium, the computer-readable medium having computer-readable code embodied therein, the computer-readable code being configured such that, on execution by a suitable computer or processor, the computer or processor is caused to perform steps of the method disclosed herein.

According to a third aspect, the present invention provides a system comprising a display configured to display an item of computer-generated content between an eye of a user and an object; one or more sensors configured to obtain data relating to an action of the user in relation to the object; and a processor in communication with the one or more sensors and the display. The processor is configured to receive, from the one or more sensors, data relating to the object and/or to the action of the user in relation to the object; determine, based on the received data, a region of interest of the object; and modify the appearance of the item of computer-generated content to reduce an amount by which the item of computer-generated content obscures the user's view of the region of interest of the object.

In some embodiments, the display may be further configured to display an image of the object with the item of computer-generated content. The processor may be configured to modify the appearance of the item of computer-generated content to reduce an amount by which the item of computer-generated content obscures the user's view of the region of interest of the object in the displayed image of the object.

The one or more sensors may, in some embodiments, comprise one or more of: an image capturing device, a microphone, and an electroencephalography sensor.

The processor may be configured to modify the appearance of the item of computer-generated content based on a combination of data from at least two sensors of the one or more sensors.

These and other aspects of the invention will be apparent from and elucidated with reference to the embodiments described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 is a plan view illustration of an example of an arrangement or system according to embodiments disclosed herein;
Fig. 2 is a perspective view of the head of the user wearing a mask;
Fig. 3 is a plan view illustration of a user engaged in an activity with an object;
Fig. 4 is an illustration of a user's view of an object on, or through, a display;
Fig. 5 is a flowchart of an example of a method of modifying an item of computer-generated content displayed on a display screen;
Fig. 6 is a flowchart of a further example of a method of modifying an item of computer-generated content displayed on a display screen;
Fig. 7 is a schematic illustration of an example of a processor in communication with a computer-readable medium; and
Fig. 8 is a schematic illustration of an example of a system for modifying an item of computer-generated content displayed on a display screen.

### DETAILED DESCRIPTION OF EMBODIMENTS

While augmented reality can be used to provide substantial benefits in situations where a person needs to have access to additional information (e.g. text, data or drawings) while performing a task in respect of a real-world object, there exists the possibility that the computer-generated content displayed to the user may obscure the user's view of the object, or otherwise distract the user from the task they are performing. Embodiments disclosed herein provide a mechanism by which data acquired using one or more of the variety of sensors may be used to determine a particular region of interest of a real-world object with which the user is interacting, and to make consequential modifications to the computer-generated content to reduce the impact of the content on the user's ability to perform the task.

Generating an augmented reality environment typically involves displaying computer-generated content on a display screen that can be viewed by a user, for example while the user is performing a task. In some embodiments, the display screen may comprise a see-through display, such as a lens of a mask or pair of glasses, onto which the computer-generated content may be displayed or projected. In other examples, the display screen may comprise a display of a computing device, such as a tablet computer. In such examples, a camera (e.g. a camera of the computing device) may be used to capture an image or images (e.g. live video footage) of the object with which the user is interacting, and the image(s) may be presented on the display of the computing device with the computer-generated content overlaid or superimposed over the image(s). Embodiments disclosed herein may also be used in a projected augmented reality system.

A variety of different types of content may be generated and displayed on the display, depending on the task to be performed by the user. For example, in a medical setting, a surgeon may be performing an operation on a patient. To prevent any cross-contamination, the surgeon cannot use their hands to manipulate a computing device in order to access information about the patient, or recent medical imaging scans. Therefore, the surgeon may wear a mask having an integrated display, capable of displaying such information to the surgeon during the operation. In this scenario, it is important that the surgeon is able to see the particular region of interest of the patient, where the operation is taking place and, therefore, it is important that content presented on the display of the surgeons mask does not remain in a position that would impair the surgeon's view of the patient. In another example, a field service engineer may be tasked with repairing a component of a piece of equipment. The engineer may use a tablet computer to display a step-by-step guide to performing the repair. The guide might provide labels that identify various parts of the component to be repaired, and these may superimposed over live video footage of the component, captured by a camera on the tablet device. As the engineer performs the repair, it may be important for them to be able to see a region of interest of the component clearly on the display of the tablet computer, without the generated content obstructing the engineer's view. Embodiments described herein may be implemented in these scenarios and in other scenarios not discussed herein.

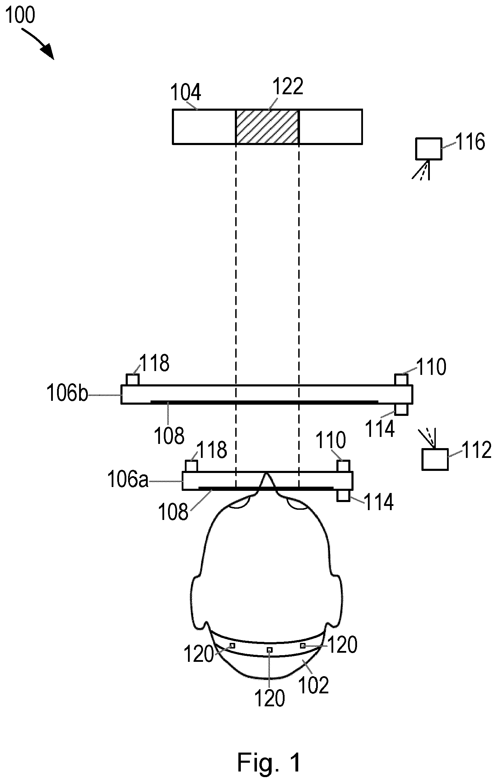

Referring now to the drawings, Fig. 1 is a plan view illustration of an arrangement 100 in which a user 102 is engaged in an activity while using an augmented reality system. In this example, the user 102 is looking at an object 104, in respect of which a task is being performed by the user. An augmented reality environment is created using a device 106, by presenting computer-generated content on a display 108 of the device. In the arrangement 100 shown in Fig. 1, two different examples of devices 106 are shown. A first exemplary device 106a comprises a display device, such as a mask (e.g. a face mask), a head- up display (HUD), contact lenses or a pair of glasses (e.g. smart glasses), having a display 108 which may form part of a see-through structure or lens, enabling the user 102 to view the object 104 while content is presented to the user on the display 108. A second exemplary device 106b comprises a computing device, such as a tablet computer or smartphone having a display 108 on which an image of the object 104 may be presented in addition to computer-generated content, such that the user 102 is able to view a representation of the object 104 in real time, along with the computer-generated content. Typically, only one of the devices 106a and 106b would be used at a time, though the use of multiple devices simultaneously is not excluded.

Various sensors may be provided to acquire data relating to the user 102 and/or the object 104. For example, one or more imaging sensors 110 (e.g. object-facing imaging sensors) may be provided to capture an image, or a series of images (e.g. video footage) of at least a portion of the object 104. An imaging sensor 110, such as a charged coupled device (CCD), camera, or a video camera, may be provided on or as part of the device 106a or 106b, configured to capture an image or images of the object 104 when aimed towards the object.

In some embodiments, one or more additional imaging sensors 112 may be provided separately from the imaging sensors 110 and/or separate from the device 106. For example, the imaging sensor 112 shown in Fig. 1 may comprise a camera aimed at the object 104, and located on a support, or mounted on a surface such as a wall. One or more additional imaging sensors 114 may be provided in order to capture imaging data associated with the user 102 and, particularly, with the face or one or more of the eyes of the user. For example, an imaging sensor 114 (e.g. a user-facing imaging sensor) may form part of, or provided on, the device 106, and aimed towards the eye or eyes of the user 102. Such an imaging sensor 114 may also be used for iris recognition, for example for user identification. The imaging sensor(s) 114 may, for example, be provided on the same side of the device 106 as the display 108. In some embodiments, one or more additional imaging sensors 116 may be provided separately from the imaging sensors 114 and/or separate from the device 106. For example, the imaging sensor 116 shown in Fig. 1 may comprise a camera aimed at the user 102, located on a support, or mounted on a surface, such as a wall. Data acquired using the user-facing sensor or camera may be used to determine a facial expression of the user 102, which may be indicative of a level of concentration of the user in relation to the object 104.

The sensors may, in some embodiments, comprise one or more microphones 118 or other sensors capable of detecting and capturing sound, in order to record audio data, such as sounds made by the user 102 and/or by the object 104. In some embodiments, the sensors may comprise one or more sensors attached to or associated with the user 102. For example, one or more sensors 120 may be provided on a headpiece or strap associated with or in contact with the head of the user 102. In one example, a sensor 120, such as an electroencephalography (EEG) sensor, may be configured to acquire data relating to the brain of the user. Such a sensor may be used to measure data from which a level of concentration of the user may be determined. Similarly, a concentration level of the user may be determined from eye gaze data, particularly data showing scanning behavior of the user's eyes. For example, if the eyes appear to be focused on one point, then it might be determined that the user is concentrating on performing a task in respect of the object 104, while regular movement from left to right might indicate that the user is reading text.

Embodiments disclosed herein may make use of data acquired using the sensors 110, 112, 114, 116, 118, 120 discussed above. The data acquired using the sensors may be used to modify the content displayed on the display 108 so as to reduce the amount by which the content obscures the view of the object 104 by the user 102. It will be understood that the object 104 may be a large object, and the user 102 may be performing a task in respect of just one part of the object. Thus, the user 102 may view, or focus on, a particular portion or region of interest 122 of the object 104. The data acquired using the sensors discussed herein may be used to determine the extent of the region of interest 122 and to modify content displayed on the display 108 of the device 106 to reduce the extent to which the content obscures the user's view of the region of interest of the object 104.

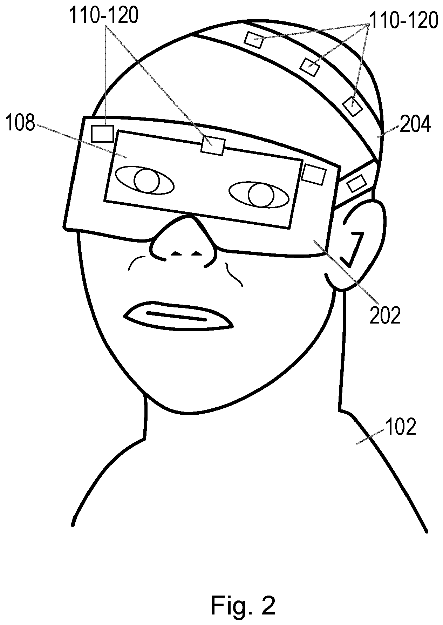

Fig. 2 is a perspective view of the head of the user 102 wearing a mask 106a capable of presenting computer-generated content the user. The mask 106a comprises a see-through lens portion 202, having the screen 108 located on the side of the lens portion that faces the user's eyes. The mask 106a may be secured to the user's head by one or more straps 204. The sensors 110 to 120 may be positioned on a surface of the lens portion 202 or a frame thereof, facing towards or away from the user's eyes, and/or on the straps 204.

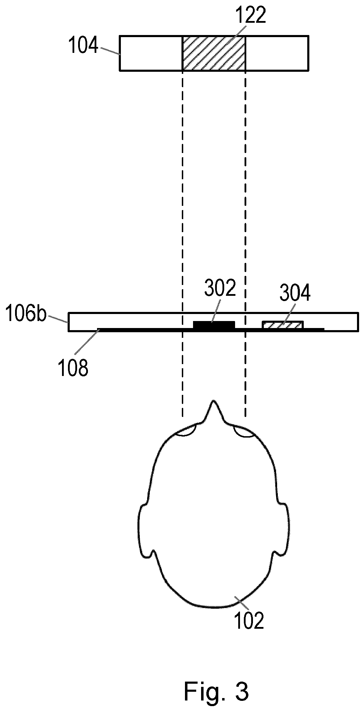

Fig. 3 is a plan view illustration of an arrangement 300 in which the user 102 is engaged in an activity with the object 104 while using an augmented reality system. As in Fig. 1, the user 102 is focused on the region of interest 122 of the object 104. In this example, computer-generated content is displayed on a display 108 of the device 106a, such as a head-mounted mask. Initially, the computer-generated content may be displayed at a first position 302, which might correspond to an approximately central position on the display 108. When displayed in the position 302, the content may obscure or block part or all of the region of interest 122 of the object 104. Such positioning may initially be convenient to enable the user 102 to view the content clearly. For example, the content may comprise an instruction in the form of text, informing the user of a task to be performed. However, once the user 102 has read the instruction, or viewed in the content, they may wish to focus on the region of interest 122 of the object 104, without the region of interest being obscured by the displayed content. Thus, as is explained in greater detail below, data from the sensors 110 to 120 may be used to identify or determine the region of interest 122, and modify the displayed content to reduce the amount by which the content obscures the user's view of the region of interest. For example, the displayed content may be moved from the first position 302 to a second position 304, where the content does not obscure or interfere with the user's view of the region of interest 122 of the object 104. As is apparent from the discussion below, other modifications may be made to the content to reduce the impact on the user's view of the region of interest 122, such as reducing the size and/or opacity of the displayed content. In some examples, multiple items of content may be modified, by movement and/or by changing the size/appearance of the content.

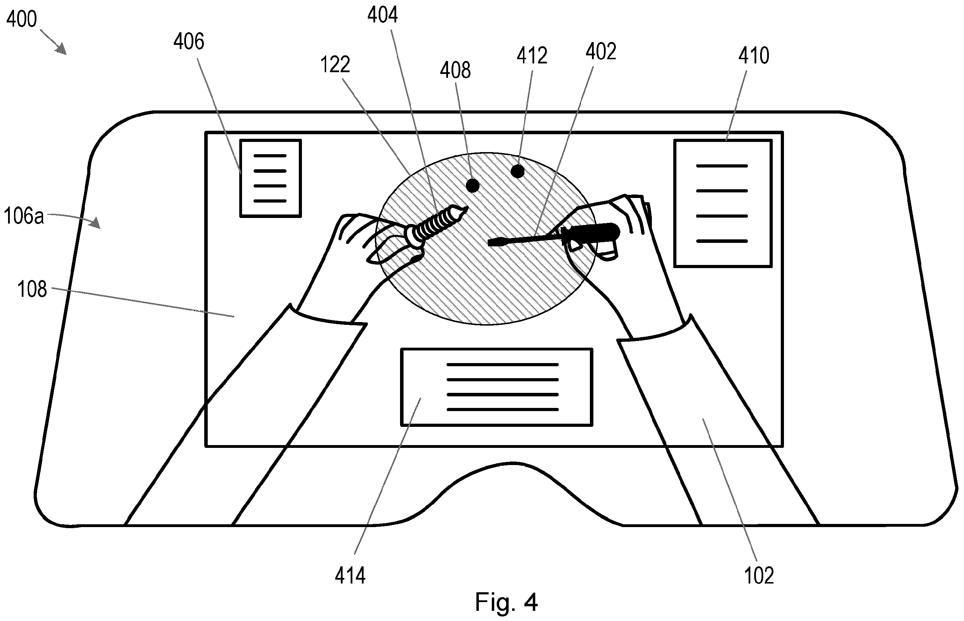

One example implementation of an embodiment of the invention is shown in Fig. 4, which is an illustration of a user's view 400 of, or through, the display 108 of a device 106. In this example, the device comprises a user-wearable device 106a, such as a mask. A lens of the mask 106a is see-through, enabling the user 102 (e.g. the wearer of the mask) to view an object in respect of which they are interacting. In this example, the user 102 is wearing the mask 106a while performing a task involving using a screwdriver 402 to tighten a screw 404. Thus, in this example, the object 104 may comprise the screwdriver 402, the screw 404 and/or one or more other objects on which the user 102 may focus while performing the task. While the user 102 is performing the task, computer-generated content may be presented on the display 108 to aid the user in the task. For example, a first instruction 406 may be displayed, advising the user 102 to attach a first screw (e.g. the screw 404) to a first screw hole (e.g. the screw hole 408). Once that task has been performed, a second instruction 410 may be displayed, advising the user 102 to attach a second screw (not shown) to the screw hole 412. Third instructions 414, which may include subsequent instructions, a diagram, or the like, may be displayed concurrently with the first and second instructions 406, 410, or following completion of one of the other tasks.

The region of interest 122 is indicated in the example shown in Fig. 4. The region of interest 122 is determined using data acquired from sensors as discussed herein. In this example, the region of interest 122 includes a region in which an object(s) or part of an object(s) may focused on by the user 102, such as the screw hole 408, the screw 404 and the screw driver 402. The instructions 406, 410, 414 or other content may initially be displayed in the center of the display 108, in a position that enables the user 102 to view the content most easily, but which may obscure the user's view of the region of interest 122. To enable the user 102 to focus clearly on the task of tightening the screw 404, it may be preferable that the content is modified so as to reduce the amount by which is obscures the user's view of the region of interest of the screwdriver 402 and/or the screw 404. Thus, the content may be moved from the center of the display 108 into a position nearer to the edge of the display, out of the user's view of the region of interest 122, as shown in Fig. 4. In some examples, content that has been iconized or reduced in size may be enlarged if the user looks at the content, rather than at the object 104, for example for a determined duration.

In the above example, the object 104 at which the user 102 is looking comprises the screwdriver 402, the screw 404, one or more of the screw holes 408, 412, and/or an object in which the screw holes are formed. This scenario may, for example, form part of a maintenance task being performed by a field service engineer. Examples of other objects 104 with which the user 102 may interact or on which the user may be focused include, but are not limited to, a computing device or content displayed on a screen of a computing device, content displayed on paper or in a book, such as an instruction manual or a medical prescription, a consumer device, such as a kitchen appliance, a medical device, such as an imaging device or a piece of medical equipment, a medical tool, such as a scalpel or an image guided therapy (IGT) intervention tool, a plate or item of food during a food preparation process and a person, such as a patient or co-worker. It will be apparent that the object 104 may comprise any object. In some examples, the object 104 may comprise an image or a projection of an image, for example on a screen.

The user 102 may be looking at, focusing on, performing a task in relation to and/or otherwise interacting with the object 104. While it will be apparent that the user 102 may perform any type of action in respect of the object 104, examples of actions that may be performed in respect of the object include reading text (e.g. letters, words and/or numbers), viewing or inspecting an image, diagram or graph, viewing or inspecting a device or piece of equipment (e.g. inspecting cables or connections between a cable and a piece of equipment), operating or manipulating a device or a piece of equipment (e.g. opening a box), engaging with a device or a piece of equipment (e.g. operating a laptop computer to view a document), operating a tool in relation to a device or a piece of equipment (e.g. using a screwdriver to tighten or loosen a screw), operating a tool in relation to a person (e.g. using a stethoscope to monitor the breathing of a patient), talking to a person, viewing or inspecting a person (e.g. examining a wound of a patient, or making eye contact with a co-worker), and interacting physically with a person (e.g. shaking hands with a person or palpating a patient).

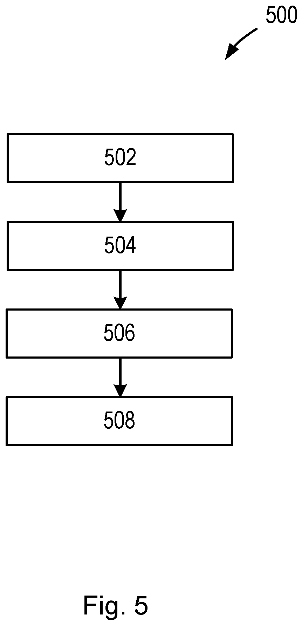

According to a first aspect, the present invention provides a method of modifying an item of computer-generated content displayed on a display screen. Fig. 5 is a flowchart of an example of such a method 500. The method 500 may, in some embodiments, comprise a computer-implemented method. The method 500 comprises, at step 502, displaying an item of computer-generated content on a display screen 108 positioned between an eye of the user 102 and an object. The display screen 108 may, for example, comprise the display of the device 106a or 106b, and the computer-generated content may comprise content to aid the user in performing a task, such as the instructions 406, 410, 414 discussed above. In other examples, the computer-generated content may comprise text, images, diagrams, videos, and the like.

At step 504, the method 500 comprises receiving data relating to the object and/or to an action of a user in relation to the object. The data may, for example, be acquired using one or more sensors, such as the sensors 110 to 120 discussed herein. The data may, for example, comprise eye gaze data of the user. The user-facing sensors 114, 116 (see Fig. 1) may, for example, be used to capture image data from which a direction of the user's gaze may be determined. In some examples, data acquired using the user-facing sensors may be combined with data acquired using other sensors to determine more accurately information about the direction, and changing direction, of the user's gaze. The eye gaze data may, for example, indicate that the user 102 is looking intently at the object 104, rather than content presented on the display screen 108.

In some examples, the data may comprise data indicative of a focus of the eye of the user. Again, the user-facing sensors 114 or the cameras 116 may acquire data indicative of the ocular focus of the user, for example by measuring and analyzing a change in the size of the user's pupil(s). The data relating to the focus of the user's eye may be used to determine whether the user is focusing on something near to their eyes (e.g. the display 108 of the device 106a) or on something further away from their eyes (e.g. the object 104).

In other examples, the data may comprise data indicative of a movement or gesture performed by the user 102. This type of data may, for example, be acquired using one or more of the object-facing sensors or cameras 110, 112. Such data may, for example, be indicative of a defined gesture performed by a hand of the user 102, such as a wave of the hand, a swipe of the hand in a particular direction (e.g. left, right, up or down), a "thumbs up" or "thumbs down" gesture, or the like. In other examples, analysis of the data may indicate that the user is performing a particular task, for example through an identification of the manner in which the user is moving his or her hand (e.g. rotating the hand while tightening a screw using a screwdriver). In some examples, the data may be indicative of a particular motion, movement or gesture that is recognized as during which the user typically needs to pay careful attention, such as making an incision using a scalpel or moving a hand towards a button within extended index finger. Thus, analysis of the data may reveal that the user is moving their hand in a particular way that is indicative that they are performing a particular medical procedure.

The data may, in some examples, be indicative of spatial properties of the object 104. For example, the data may indicate the size or shape of the object 104 and/or may indicate that the object has text displayed thereon. As is discussed in greater detail below, data indicative of spatial properties of the object 104 may be used in combination with other types of data in order to recognize when a user is viewing or focusing on the object rather than the display 108. The data indicative of the spatial properties of the object 104 may, for example, be acquired using the object-facing sensors 110, 112.

Data may be acquired that is indicative of an identity of the object 104. Such identifying data may be the same as, or similar to, the data indicative of the spatial properties of the object 104. For example, image data acquired using the object-facing sensors 110, 112 may be used to classify or determine the identity of the object 104. Object recognition techniques may be applied to such image data in order to identify the object 104, and the identification or recognition may be used alone or in combination with other data to determine whether or not the user 102 should be viewing or focusing on the object. For example, if it is determined that the object 104 comprises a scalpel or knife, then a decision may be made to modify the appearance any content displayed on the display screen 108 to enable the user 102 to view and focus on the scalpel or knife.

The data may, in some examples, comprise sound data in relation to the user. One or more of the microphones 118 may be configured to record sounds made by the user 102, such as the user's voice while speaking. For example, speech detection techniques (e.g. natural language processing (NLP)) may be used to detect when the user 102 is talking to the object 104 (e.g. a person), or when the user is talking about the object 104. The sound data may, for example, comprise sounds or noises generated while the user is performing a task in relation to the object 104, and such data may be used to determine that a modification of the computer-generated content displayed on the display screen 108 should be made. If the sound data indicates that the user 102 is speaking about the object 104, then it may be determined that the user wishes to remain focused on the real-world object, and not to be distracted by computer-generated content.

In other examples, the data may comprise movement patterns of the object itself. For example, the object or a part thereof may move in an intended, expected or predicted way, and this movement may be recorded.

In some examples, data relating to the object may be acquired from a data storage medium, such as a memory storing a database. Such a database may include data indicating the identity of a plurality of objects, such as a name or label indicative of the identity of the object, associated with data such as an image or description of the object. In this way, an image of the object (or other data) captured using one or more of the sensors described herein may be compared to an image (or other data) stored in the database so that the object can be identified or recognized. In a similar way, an object 104 may include an identifier, such as a tag, an indication of the identity of the object, an RFID tag, a barcode, a QR code, or the like. Analysis of an image of the object (or other data) may enable the identity of the object 104 to be determined from the identifier.

Data from the sensors 110 to 120 may be received and processed by a processor, which may also be in communication with the database. As discussed below, the processor may determine, based on input from the sensors and/or the database, which part or parts of the object 104 are within a region of interest 122, whether or not any modification of computer-generated content should be made and, if so, the nature of any such modification.

The method 500 comprises, at step 506, determining, based on the received data, a region of interest 122 of the object 104. The determination at step 506 may, for example, be made using the processor discussed herein. In some examples, the size or extent of the region of interest 122 may be determined. For example, using eye gaze data, it may be determined that the user's gaze is directed towards a particular part of the object 104, and does not divert from that part of the object for a defined period of time. That part of the object may, therefore, be determined to fall within the region of interest 122, and the boundaries of part of the object may be considered to comprise the boundary of the region of interest. In another example, if it is determined that the user 102 is holding a scalpel or a knife, then the blade of the scalpel or knife may be considered to fall within the region of interest 122. If the scalpel is being used to make an incision in the body of a patient, then the incision, and part of the patient's body may also be considered to fall within the region of interest 122. In some examples, the region of interest 122 may be defined by a shape (e.g. a circle, an oval, a rectangle or the like) drawn at a defined distance around the part of the object 104. For example, if a blade of a scalpel is detected, then the region of interest 122 may be determined to be region falling within a circle of a defined radius (e.g. 5 cm) centered on the point of incision of the scalpel.

The region of interest 122 may be determined in different ways depending on the nature of the data obtained from the sensors. For example, as noted above, when eye gaze data is obtained, the direction of the user's gaze may be used to determine the part or region of the object being viewed by the user 102, and hence the region of interest, and when data is available that is indicative of the identity of the object, the region of interest of the object may be determined based on an understanding or assumption that the user's focus or attention will be directed to a particular part or region of the object. When data is acquired that is indicative of a movement or gesture performed by the user, the region of interest may be determined to be a particular region identified by the user's gesture, or determined to be a defined region of the object based on the nature of the user's movement or gesture. For example, a plurality of known gestures may be stored in a database, each gesture corresponding to a region of interest of a particular size and/or shape. When data indicative of spatial properties of the object is obtained, region of interest may be based on the spatial properties. For example, if the object 104 comprises a device such as a smartphone displaying a text message or email, then the region of interest may be defined around the identified lines of text. Alternatively, the boundary of the device or object itself may define the boundary of the region of interest. When sound data is acquired, the data may provide an indication regarding the extent of the region of interest. For example, if the data indicates that the user 102 has said "Look at the screw in component A", then the region of interest may be defined around the screw and/or around component A. Data from various sources (e.g. sensors and databases) may be combined and used to determine the region of interest.

At step 508, the method 500 comprises modifying the appearance of the item of computer-generated content to reduce an amount by which the item of computer-generated content obscures the user's view of the region of interest 122 of the object 104. Various techniques may be used to modify the appearance of the content, some of which will be familiar to those skilled in the relevant field. For example, content, or part of the content, may be: made transparent, made less opaque, made smaller in size, iconized, modified to reduce the amount of information being displayed, modified to reduce the contrast (e.g. by adjusting color, brightness, font size, font thickness, and/or blurring levels) between the content and the object, moved out of the user's line of sight of the region of interest of the object 104, moved nearer to a region of the peripheral vision of the user, anchored to an item appearing in the user's field of view in or through the display screen 108 (e.g. virtually anchored to an arm of the user appearing on the display screen) and/or adapted to give the impression to the user that the content is appearing behind the object or the region of interest of the object. Other modifications to the appearance of the content are also envisaged. For example, the modification of the data may comprise a modification made or initiated by the user 102, such as the user "pushing" the content to one side, or out of the way of the object 104. In another example, if the content is partially in the way of the user's view of the object 104 or the region of interest 122, then sensors may detect movements of the user 102 (e.g. the user's head) to attempt to "look around" or see past the content. For example, a particular pattern of head movements or a particular inclination or tilt of the head may be indicative of the user's intention to see past the content. Upon detection of such an indication, the content may be moved or its appearance may be modified as disclosed herein.

In some examples, it may be intended that some content is to remain in the field of view of the user 102 between the user's eyes and the object 104. In such examples, the modification may comprise making the content partially transparent in response to the received data.

In some embodiments, the nature of the modification of the content appearance may be based on one or more rules provided to a processor performing the method. The nature of the modification may be based on a user profile associated with the user. For example, a user may log in to a system on which the method is implemented, and the modification made to the content may vary from user to user based, for example, on authorizations and/or preferences set out in the user profile. The modification of the content may be based on the nature of the content, in some examples. Some types of content may be moved to one side of the display screen 108 while other types of content may be minimized or iconized, or removed altogether.

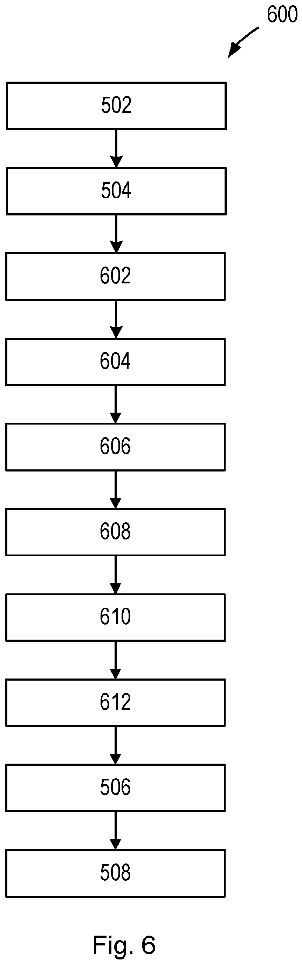

Fig. 6 is a flowchart of a further example of a method 600, such as a method of modifying an item of computer-generated content displayed on a display screen. The method 600 may comprise steps of the method 500 discussed above. At step 602, the method 600 may comprise establishing, based on the received data, that the eye of the user 102 is focused on the region of interest 122 of the object 104 or that the user is performing an action in respect of the region of interest of the object. For example, as noted above, data acquired by using the user-facing sensors 114 or the user-facing camera 116 may be used to measure the ocular focus of one or both eyes of the user 102, and this may be used to determine whether or not the user's eye(s) is focused on the region of interest 122 of the object 104. The data indicative of the focus of the eye may, in some embodiments, be combined with eye gaze data to determine even more accurately where the eye is focused. In other examples, data acquired using the sensors 110 to 120 may indicate that the user 102 is performing a particular action, such as touching or otherwise engaging, cutting, and so on, and that the action is being performed in relation to the region of interest 122 of the object 104. For example, data acquired using the object-facing sensors 110 or the object-facing camera 112 may indicate that a scalpel is being used by the user 102 to make an incision in the object 104 (e.g. a patient). It is noted that the object 104 may comprise multiple objects. For example, the object in this example might comprise the patient and the scalpel (e.g. a combination of multiple objects).

In some embodiments, the modifying (step 508) may comprise modifying the appearance of the item of computer-generated content based on said establishing of step 602. For example, if it is determined that the user 102 is focused on a particular item within the region of interest 122, or that the user is performing an incision in the object 104, then the appearance of the content may be modified to enable the user to see the object more clearly, with reduced obscuration.

As discussed above, in some embodiments, the computer-generated content may be displayed on a display screen 108 of a mask or eyewear of the device 106a, such that the user is able to see through the display and view the object 104 with which they are interacting. However, when content is presented on a display screen of a device 106b such as a tablet computer, the user 102 may not be able to view the object 104 through the device. Therefore, an image or live video footage of the object 104 (for example an image or images captured using the object-facing sensor 110 or the object facing camera 112) may be presented on the display screen 108 along with the content, so that the user can view the content and the object simultaneously. Thus, the method 600 may comprise, at step 604, displaying an image of the object 104 on the display screen 108 with the item of computer-generated content. In such examples, the user 102 may still need to view a region of interest 122 of the object 104 (i.e. in the image of the object) and, therefore, the content may be adjusted to enable the user to have a clear view. Thus, modifying (step 508) may comprise modifying the appearance of the item of computer-generated content to reduce an amount by which the item of computer-generated content obscures the user's view of the region of interest of the object in the displayed image of the object.

The appearance of content displayed on the display screen 108 may be modifying, in some embodiments, based on data from just one sensor, such as eye gaze data, or data indicating that the user is interacting with the object using a potentially dangerous tool. Such data may be sufficient for the content, or the appearance thereof, to be modified (step 508). In some embodiments, however, data from multiple sources may be used to determine whether or not the appearance of the content should be modified and/or to modify the appearance of the content. In one particular example, the received data may comprise a combination of eye gaze data and data indicative of spatial properties of the object 104. The combination of data may be used to modify the appearance of the content. For example, the eye gaze data may indicate that the user 102 is moving their eyes in a series of lines. The data indicative of spatial properties of the object 104 may indicate that the object comprises a passage of text, such as text of a book. This may, for example, be determined using feature recognition techniques, for example using machine learning techniques. Based on the combination of the eye gaze data and knowledge of the nature of the object (i.e. from the data indicative of spatial properties of the object), it may be determined that the user 102 is reading the text and it may further be determined that the user's view of the region of interest 122 of the object 104 should not be obscured (or should be obscured less) and, therefore, the appearance of the item computer-generated content may be modified to reduce such obscuration of the text being read, or of the object containing the text.

In another example, the received data may comprise a combination of eye gaze data and data indicative of a movement or gesture made by the user 102. In this example, the data indicative of a movement or gesture made by the user 102 may indicate that the user is performing a particular task (e.g. tightening the screw with a screwdriver, marking a line with a pencil, and the like) or giving a particular signal (e.g. thumbs up, "okay" sign, or "cut" signal, using two fingers of their hand), and this information in combination with the eye gaze data of the user may be used to make an appropriate modification to the appearance of content displayed on the display screen 108 such that the degree by which the user's view of the region of interest 122 is obscured can be reduced. In some embodiments, the acquired data may indicate that the gaze of the user 102 is following or tracking a movement or gesture user. For example, the user's gaze may be tracking a path of a tip of a pen or a path of a blade of a scalpel being moved relative to the object (e.g. making an incision). In such an example, it may be determined that, since the user's gaze is tracking a particular motion within the region of interest, the user needs to see the region of interest clearly and, therefore, manipulation of any content obscuring the user's view ought to be actioned.

Returning to Fig. 6, the method 600 may further comprise, at step 606, determining, based on the received data, contextual information relating to the user, the object and/or the action of the user in relation to the object. In other words, step 606 may comprise determining a context in relation to which the user 102 is interacting with the object 104. For example, it may be determined that the user is performing a particular task in relation to the object or the region of interest of the object, which requires the user to pay particular attention, and have a clear view of the object or the region of interest of the object. For example, the contextual information determined at step 606 may comprise an indication that the user is performing a medical task (e.g. using a scalpel) performing a high-concentration task (e.g. counting items) or entering information (e.g. type or writing). When the contextual information indicates that the user 102 should have a clear view of the object, then the appearance of the computer-generated content may be modified accordingly. In some examples, a database may contain a list of tasks that are considered to require a user's full attention (e.g. medical tasks, high-concentration tasks, information-entering tasks, and so on) associated with particular data or features, such that, when data is acquired using the sensors, it can be compared to the database entries in order to determine whether or not the task being performed by the user requires the user's full attention and/or the users and obscured view of the object.

In examples where contextual information is determined, the modifying of step 508 may comprise modifying the appearance of the item of computer-generated content based on the determined contextual information. For example, if a high-concentration task is detected, then all computer-generated content obscuring the region of interest 122 of the object 104 may automatically be moved out of the user's view of the region of view.

The method 600 may, in some embodiments, further comprise, at step 608, determining, based on the received data, whether or not the appearance of the item of computer-generated content is to be modified. Thus, prior to modifying the content at step 508, a determination may first be made as to whether or not modification of the content's appearance is required. In some examples, data acquired using the sensors may indicate that the user is not focusing on the object 104; rather, it may be determined that the user is viewing and/or focusing on the computer-generated content being displayed on the display screen 108. In such examples, rather than modifying the appearance of the content to reduce the amount by which the content obscures the user's view, the computer-generated content may be left in full view of the user. In some examples, following the modification of the appearance of the content at step 508, the determination step 608 may be performed to check whether or not the user 102 is still focusing on the object 104. If it is determined that the user 102 is focusing on the computer-generated content, rather than on the object 104, then the appearance of the content may be modified to bring the content into more prominent view, for example to increase the amount by which the content obscures the region of interest 122 of the object.

At step 610, the method 600 may further comprise receiving workflow information defining a procedure or workflow to be performed by the user 102 in respect of the object 104. For example, an engineer may be repairing a piece of equipment (e.g. the object 104), and the computer-generated content may comprise a series of instructions setting out steps of a workflow or procedure to be performed in order to complete the repair. Workflow information defining the procedure or workflow may be obtained (e.g. provided by a user or by another computer system, or downloaded from the cloud) and used to present steps of the procedure or workflow as computer-generated content. The method may comprise, at step 612, determining, based on the received data relating to an action of the user 102 in relation to the object 104, progress made by the user with respect to the procedure or workflow. For example, the data acquired using the sensors may indicate that the user 102 has completed a first step of a repair workflow (e.g. if it is determined that the user has put down a particular tool, such as a screwdriver). If it is determined that the user has completed the first step of the repair workflow, then the appearance of the computer-generated content may be manipulated (at step 508) to remove the instructions relating to the first step of the workflow from the display screen and may, for example, display the instructions relating to the second step of the workflow, instead. In other examples, when the workflow/procedure progress of the user has been determined, the step of determining (step 608) whether or not the appearance of the item of computer-generated content is to be modified may be based on the determined progress. Thus, if the received data relating to an action of the user indicates that the user has not completed a particular task, or if the data determines that the user is still reading the instruction displayed on the display screen 108 (i.e. the computer-generated content), then a decision may be made at step 608 not to modify the appearance of the content.

As will be clear from the above discussion, the action of the user 102 in relation to the object 104 may, in some embodiments, comprise a physical interaction between the user and the object. Such a physical interaction may, for example, comprise touching the object 104 with a body part of the user 102, touching the object with a tool or another item, or directing or projecting something towards the object.

Fig. 6 shows various steps which may be performed as part of, or in addition to, steps of the method 500. While the steps 602 to 612 are shown linearly in Fig. 6, it will be appreciated that the steps of the methods 500, 600 may be performed in any order or concurrently, and one or more of the steps discussed herein may be omitted.

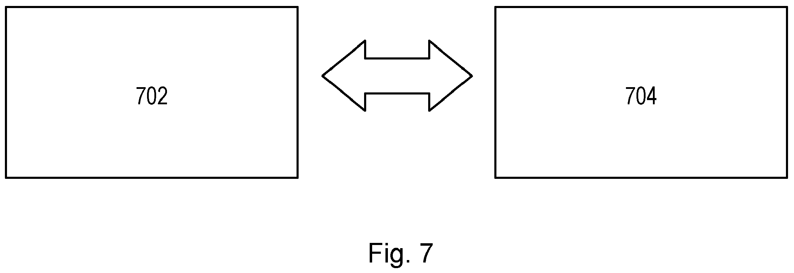

According to a second aspect, the present invention provides a computer program product comprising a non-transitory computer-readable medium. Fig. 7 is a schematic illustration of an example of a computer-readable medium 704 in communication with a processor 702. The computer-readable medium 704 has computer-readable code embodied therein, the computer-readable code being configured such that, on execution by a suitable computer or processor 702, the computer or processor is caused to perform steps of the methods 500, 600 discussed herein.

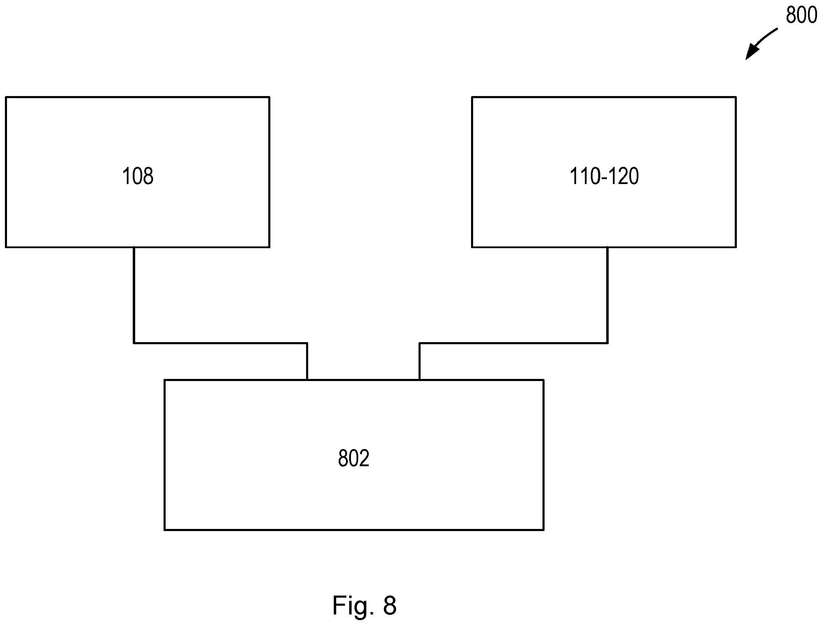

According to a third aspect, the present invention provides a system, such as a system for modifying an item of computer-generated content displayed on a display screen. Fig. 8 is a schematic illustration of a system 800. The system 800 comprises a display (e.g. the display 108), one or more sensors (e.g. sensors 110 to 120) and a processor (e.g. the processor 802. The display 108 is configured to display an item of computer-generated content between an eye of a user 102 and an object 104. The display 108 may, for example, comprise a display screen forming part of a display device 106, as shown in Fig. 1. The one or more sensors 110 to 120 are configured to obtain data relating to an action of the user 102 in relation to the object 104. As discussed above, the sensors 110 to 120 may form part of the device 106, or may comprise separate or individual sensors, located remotely from the device. The one or more sensors 110 to 120 may comprise one or more of: an image capturing device, a microphone, and an electroencephalography (EEG) sensor. In other embodiments, the one or more sensors may comprise other types of sensor.

The processor 802 is in communication with the one or more sensors 110 to 120 and the display 108. In some examples, the processor 802 may comprise, or be similar to, the processor 702. In general, the processor 802 may be configured to perform steps of the methods 500, 600 discussed herein. According to some embodiments, the processor 802 is configured to receive, from the one or more sensors 110 to 120, data relating to the object 104 and/or to the action of the user 102 in relation to the object 104. Such data may comprise any of the data discussed herein. The processor 802 is further configured to determine, based on the received data, a region of interest 122 of the object 104. The processor 802 is further configured to modify the appearance of the item of computer-generated content to reduce an amount by which the item of computer-generated content obscures the user's view of the region of interest 122 of the object 104.

As discussed above, the display 108 may comprise a see-through display enabling a user 102 to view the object 104 with which they are interacting with, as well as the computer-generated content presented on the display 108. In other embodiments, however, the display 108 may comprise a display of a computing device, such as a tablet computer, such that the user 102 is not able to see through the display and the device. In this example, a representation or a video of the object 104 may be presented on the display for the user to view. Thus, according to some embodiments, the display 108 may be further configured to display an image of the object 104 with the item of computer-generated content. In such embodiments, the processor 802 may be configured to modify the appearance of the item of computer-generated content to reduce an amount by which the item of computer-generated content obscures the user's view of the region of interest 122 of the object 104 in the displayed image of the object.

While, in some embodiments, a single sensor may be used to capture data on which the modification of the content's appearance is based, in other embodiments, the processor may be configured to modify the appearance of the item of computer-generated content based on a combination of data from at least two sensors of the one or more sensors.

The embodiments disclosed herein provide a mechanism by which computer-generated content can automatically be adapted or adjusted so as to reduce the amount that it obscures a user's view of a particular part of an object. Thus, if the user is interacting with the object with assistance from the computer-generated content (e.g. in an augmented reality environment), then data acquired from various sensors may be used to determine that the user is focusing, needs to focus, or should be focusing on the object, and modifies the appearance of the content accordingly.

The processor 702, 802 can comprise one or more processors, processing units, multi-core processors or modules that are configured or programmed to control elements of the system 800 in the manner described herein. In particular implementations, the processor 702, 802 can comprise a plurality of software and/or hardware modules that are each configured to perform, or are for performing, individual or multiple steps of the method described herein.

The term "module", as used herein is intended to include a hardware component, such as a processor or a component of a processor configured to perform a particular function, or a software component, such as a set of instruction data that has a particular function when executed by a processor.

It will be appreciated that the embodiments of the invention also apply to computer programs, particularly computer programs on or in a carrier, adapted to put the invention into practice. The program may be in the form of a source code, an object code, a code intermediate source and an object code such as in a partially compiled form, or in any other form suitable for use in the implementation of the method according to embodiments of the invention. It will also be appreciated that such a program may have many different architectural designs. For example, a program code implementing the functionality of the method or system according to the invention may be sub-divided into one or more sub-routines. Many different ways of distributing the functionality among these sub-routines will be apparent to the skilled person. The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at run-time. The main program contains at least one call to at least one of the sub-routines. The sub-routines may also comprise function calls to each other. An embodiment relating to a computer program product comprises computer-executable instructions corresponding to each processing stage of at least one of the methods set forth herein. These instructions may be sub-divided into sub-routines and/or stored in one or more files that may be linked statically or dynamically. Another embodiment relating to a computer program product comprises computer-executable instructions corresponding to each means of at least one of the systems and/or products set forth herein. These instructions may be sub-divided into sub-routines and/or stored in one or more files that may be linked statically or dynamically.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

## Claims

1. A computer-implemented method (500) of modifying an item of computer-generated content displayed on a display screen, the method comprising:
displaying (502) an item of computer-generated content on a display screen positioned between an eye of a user and an object;
receiving (504) data relating to the object and/or to an action of a user in relation to the object;
determining (506), based on the received data, a region of interest of the object; and
modifying (508) the appearance of the item of computer-generated content to reduce an amount by which the item of computer-generated content obscures the user's view of the region of interest of the object.

2. A computer-implemented method (500) according to claim 1, further comprising:
establishing (602), based on the received data, that the eye of the user is focused on the region of interest of the object or that the user is performing an action in respect of the region of interest of the object;
wherein said modifying comprises modifying the appearance of the item of computer-generated content based on said establishing.

3. A computer-implemented method (500) according to claim 1 or claim 2, further comprising:
displaying (604) an image of the object on the display screen with the item of computer-generated content;
wherein said modifying comprises modifying the appearance of the item of computer-generated content to reduce an amount by which the item of computer-generated content obscures the user's view of the region of interest of the object in the displayed image of the object.

4. A computer-implemented method (500) according to any of the preceding claims, wherein the received data comprises one of more of: eye gaze data of the user, data indicative of a focus of the eye of the user, data indicative of a movement or gesture performed by the user, data indicative of spatial properties of the object, data indicating an identity of the object, and sound data in relation to the user.

5. A computer-implemented method (500) according to any of the preceding claims, wherein the received data comprises a combination of eye gaze data and data indicative of spatial properties of the object.

6. A computer-implemented method (500) according to any of the preceding claims, wherein the received data comprises a combination of eye gaze data and data indicative of a movement or gesture made by the user.

7. A computer-implemented method (500) according to any of the preceding claims, further comprising:
determining (606), based on the received data, contextual information relating to the user, the object and/or the action of the user in relation to the object;
wherein said modifying comprises modifying the appearance of the item of computer-generated content based on the determined contextual information.

8. A computer-implemented method (500) according to any of the preceding claims, further comprising:
determining (608), based on the received data, whether or not the appearance of the item of computer-generated content is to be modified.

9. A computer-implemented method (500) according to claim 8, further comprising:
receiving (610) workflow information defining a procedure or workflow to be performed by the user in respect of the object; and
determining (612), based on the received data relating to an action of the user in relation to the object, progress made by the user with respect to the procedure or workflow;
wherein determining whether or not the appearance of the item of computer-generated content is to be modified is based on the determined progress.

10. A computer-implemented method (500) according to any of the preceding claims, wherein the action of the user in relation to the object comprises a physical interaction between the user and the object.

11. A computer program product comprising a non-transitory computer-readable medium (704), the computer-readable medium having computer-readable code embodied therein, the computer-readable code being configured such that, on execution by a suitable computer or processor (702), the computer or processor is caused to perform the method of any of the preceding claims.

12. A system (800) comprising:
a display (108) configured to display an item of computer-generated content between an eye of a user and an object;
one or more sensors (110-120) configured to obtain data relating to an action of the user in relation to the object; and
a processor (802) in communication with the one or more sensors and the display, the processor configured to:
receive, from the one or more sensors, data relating to the object and/or to the action of the user in relation to the object;
determine, based on the received data, a region of interest of the object; and
modify the appearance of the item of computer-generated content to reduce an amount by which the item of computer-generated content obscures the user's view of the region of interest of the object.

13. A system (800) according to claim 12, wherein the display is further configured to display an image of the object with the item of computer-generated content; and
wherein the processor (802) is configured to modify the appearance of the item of computer-generated content to reduce an amount by which the item of computer-generated content obscures the user's view of the region of interest of the object in the displayed image of the object.

14. A system (800) according to claim 12 or claim 13, wherein the one or more sensors comprise one or more of: an image capturing device, a microphone, and an electroencephalography sensor.

15. A system (800) according to any of claims 12 to 14, wherein the processor (802) is configured to modify the appearance of the item of computer-generated content based on a combination of data from at least two sensors of the one or more sensors.
